# EUROPÄISCHE PATENTSCHRIFT

(11) **EP 0 530 594 B1**
(45) Veröffentlichungstag und Bekanntmachung des Hinweises auf die Patenterteilung: **04.10.1995**
(21) Anmeldenummer: 92114168.5
(22) Anmeldetag: 20.08.1992
(51) Int. Cl.: B62D 21/12, B62D 21/00

(54) **Fahrschemel für ein Kraftfahrzeug**
Subframe for a motor vehicle
Cadre auxiliaire pour un véhicule automobile

(30) Priorität: 05.09.1991 DE 4129538
(43) Veröffentlichungstag der Anmeldung: 10.03.1993
(73) Patentinhaber: Dr.Ing.h.c. F. Porsche Aktiengesellschaft, 70435 Stuttgart (DE)
(72) Erfinder: Häussler, Harald, W-7251 Friolzheim (DE); Tschunko, Jan, W-7000 Stuttgart 31 (DE); Kronewitter, Rudolf, W-7030 Böblingen (DE); Henschel, Peter, W-7000 Stuttgart 30 (DE); Soeffge, Friedhelm, W-7250 Leonberg-Gebersheim (DE); Klosterhuber, Robert, W-7000 Stuttgart 40 (DE); Sommerer, Karl, W-7135 Wiernsheim (DE)

(56) Entgegenhaltungen:
- EP-A- 0 295 661
- DE-A- 3 006 705
- DE-A- 3 048 754
- DE-A- 3 811 259
- DE-B- 1 278 855
- FR-A- 2 615 458

## Beschreibung

Die Erfindung bezieht sich auf einen Fahrschemel für ein Kraftfahrzeug nach dem Oberbegriff des Anspruchs 1.

Ein Fahrschemel für eine Vorderachse eines Kraftfahrzeugs zur Anlenkung von Radführungsgliedern ist aus der DE-B-12 78 855 bekannt, bei dem Seitenteile mit Querträgern verbunden sind und eine fest verbundene Baueinheit gebildet wird. Die Verwendung eines solchen Fahrschemels ist allein für einen Fahrzeugtyp konzipiert und nicht für Fahrzeugtypen unterschiedlicher Bauart bzw. Antriebskonzeptionen verwendbar.

Aufgabe der Erfindung ist es, einen Fahrschemel zu schaffen, der bauartmäßig an verschiedenartig ausgeführte Fahrzeugtypen sowie Antriebs- und Betriebssysteme in einfacher Weise anpassbar ist und eine wirtschaftliche Montage bei der Herstellung sowie zur Reparatur gewährleistet.

Diese Aufgabe wird erfindungsgemäß durch die Merkmale der Ansprüche 1 und 19 gelost. Weitere vorteilhafte Merkmale beinhalten die Unteransprüche.

Der Fahrschemel besteht in vorteilhafter Weise aus lösbar zusammengesetzten Bauelementen wie Seitenteilen und Querträgern. Dies ermöglicht gegenüber unlösbar miteinander verbundenen Elementen nach dem Stand der Technik, daß der Fahrschemel in Fahrzeugen unterschiedlicher Konzeption verwendet werden kann, indem allein die Querträger ausgewechselt werden und an die örtlichen Gegebenheiten des Fahrzeugaufbaus bzw. der verwendeten Antriebseinheit oder an ein Fahrzeug mit Hinterradlenkung angepasst werden kann. Die Seitenteile sind hierzu mit entsprechenden Befestigungsmöglichkeiten für örtlich verschieden ansetzbare Querträger versehen.

Die Seitenteile des Fahrschemels bilden mit den Querträgern eine starre Montageeinheit. Sie weisen integrierte Lageraufnahmen für die Radaufhängung auf, so daß diese Seitenteile mit verbundenen Radführungslenkern eine sogenannte Vormontageeinheit bilden, die nach Verbindung mit den Querträgern aus einer Endmontageeinheit besteht, welche z.B. in der Serienherstellung am Band lagegenau mit dem Fahrzeugaufbau verbindbar ist. Vorteilig bei dieser Montageart ist auch, daß die entsprechenden Einstellungen der Achse vor der Montage ins Fahrzeug durchgeführt werden können.

Die Seitenteile sind vorzugsweise in Leichtbauweise aus Aluminiumguß bestehend und weisen jeweils zwischen einem Untergurt und einem Obergurt verbindende aufrechte Streben auf, wobei sich zwischen diesen Streben und den Gurten eine Öffnung bildet, die bei angetriebenen Hinterrädern zur Durchführung einer Gelenkwelle dient und die zentrisch zur Raddrehachse liegt.

Am vorderen freien Ende des Untergurtes und am hinteren freien Ende des Obergurtes sind Lager zur Festlegung am Aufbau einsetzbar. Diese sind etwa in einem gleichen Längsabstand zur Raddrehachse vorgesehen, damit gleiche Querkräfte bzw. Seitenkräfte in die Fahrschemellager eingeleitet werden. Auch liegt auf der Verbindungslinie der beiden Lager die Raddrehachse, was den Vorteil einer geringen Momenteneinleitung in den Fahrschemel mit sich bringt.

Die Lager weisen eine definierte elastische Kennung in Längs-, Quer- und Hochrichtung auf.

Die Querträger des Fahrschemels sind entsprechend dem Fahrzeugtyp wie z.B. mit hintenliegendem Antriebsaggregat oder mit vornliegendem Antriebsaggregat und hintenliegendem Differential ausgelegt, wobei die Seitenteile unverändert für jeden dieser Fahrzeugtypen verwendbar sind. Die Verbindung der Querträger erfolgt in Knotenpunkten der Seitenteile. In Abhängigkeit von dem Fahrzeug mit einer hintenliegenden Antriebseinheit oder dem Fahrzeug mit der vornliegenden Antriebseinheit und Hinterachsdifferential ist der Querträger dann entsprechend entweder als Brückenglied oder als Querträger mit einem Mittenlager für das Differential ausgeführt, das vorzugsweise in einer neutralen Zone liegt, in der geringste Bewegungen vorkommen. Das Differential ist nur in diesem einen Lager am Fahrschemel abgestützt. Das weitere Lager kann unmittelbar am Fahrzeugaufbau oder an einem Träger des Fahrzeugs mit relativ großer Basis vorgesehen sein, so daß im Fahrschemel nur mäßige Kräfte in Hochrichtung und vor allem kein Kippmoment eingeleitet wird, wie es bei einer Anordnung der beiden Lager zur Halterung des Hinterachsdifferentials nach dem Stand der Technik am Fahrschemel der Fall sein würde.

Auch wird bei einem Fahrzeug mit zusätzlicher Hinterradlenkung und unabhängig von der Lage des Antriebsaggregats ein anderer hintenliegender Querträger verwendet, als bei einem Fahrzeug nur mit Vorderradlenkung. In diesem Fall mit zusätzlicher Hinterradlenkung wird ein Querträger verwendet, in dem ein entsprechender Stellzylinder für die Lenkung angeordnet ist oder der Stellzylinder ist in den Querträger integriert, wobei der Stellzylinder dann an jedem Ende mit einer länglichen Konsole verbunden ist, die am Seitenteil angeschraubt ist. Durch die Konsole wird die am Radträger angreifende Spurstange ohne Umlenkung geführt und über ein Gelenk mit der Kolbenstange verbunden. Der Querträger ist im Querschnitt teilweise eckig ausgeführt und entsprechend der aufzunehmenden Belastungen ausgelegt.

Die Konsolen sind vorzugsweise biege- und torsionsweich ausgeführt, damit Kräfte auf die Stellzylinder weitestgehend ferngehalten werden können. Zur Erzielung einer kompakten Bauweise der Einheit Querträger, bestehend aus integriertem Stellzylinder mit Hinterradstellglied, ist dieses unmittelbar mit dem Gehäuse des Stellzylinders bzw. dem Querträger verbunden, entweder vor oder hinter dem Querträger - in bezug auf die Fahrtrichtung -.

Die Querträger sind je nach Fahrzeugtyp angepasst ausgeführt, wie vorstehend beschrieben ist. So ist es bei einer hinteren Antriebseinheit erforderlich, daß ein relativ großer, vom Querträger freier Raum in Hochrichtung geschaffen wird. Dies wird in vorteilhafter Weise durch ein die Antriebseinheit überspannendes Brückenglied erzielt, das mit seinen abwärts gerichteten Schenkeln am Seitenteil über Schrauben befestigt ist, die in Fahrzeuglängsrichtung verlaufen, wodurch ein Toleranzausgleich möglich wird.

Zur wirtschaftlichen Herstellung des Brückengliedes besteht dies aus zwei Gleichteilen, die mittig im Bereich der querverlaufenden Stützstege über einen Bolzen gelenkig miteinander verbunden sind. Das Brückenglied ist in Leichtbauweise ausgeführt und weist hierzu zwischen Ober- und Untergurt verbindende, fachwerkartig angeordnete Stege auf, die zwischen sich Öffnungen bilden.

Die Querträger sind im Querschnitt entweder rund oder bestehen aus einem gerippten Gußteil als U- oder Doppel-T-Profil oder sind vieleckig ausgeführt und bestehen aus Leichtmetall oder einem anderen leichten Material. Die Anbindung an die Seitenteile erfolgt über Verbindungsflansche an den Enden der Querträger. Diese sind angeschweißt oder in anderer Weise mit dem Querträger verbunden. Die Ausbildung des Fahrschemels als Montageeinheit, bestehend aus lösbaren Seitenteilen und Querträgern, ergibt den Vorteil der Austauschbarkeit aller Teile im Reparaturfall. Desweiteren kann in einfacher Weise ein Triebwerk bzw. Aggregatausbau durch Entfernen eines unteren Querträgers vorgenommen werden, wobei die Radaufhängung unverändert bleibt, so daß eine Achsvermessung entfällt.

Ausführungsbeispiele der Erfindung sind in der Zeichnung dargestellt und werden im folgenden näher beschrieben.

Es zeigen
- Fig. 1: eine schaubildliche Darstellung eines Fahrschemels für ein Fahrzeug mit einem Hinterachsdifferential,

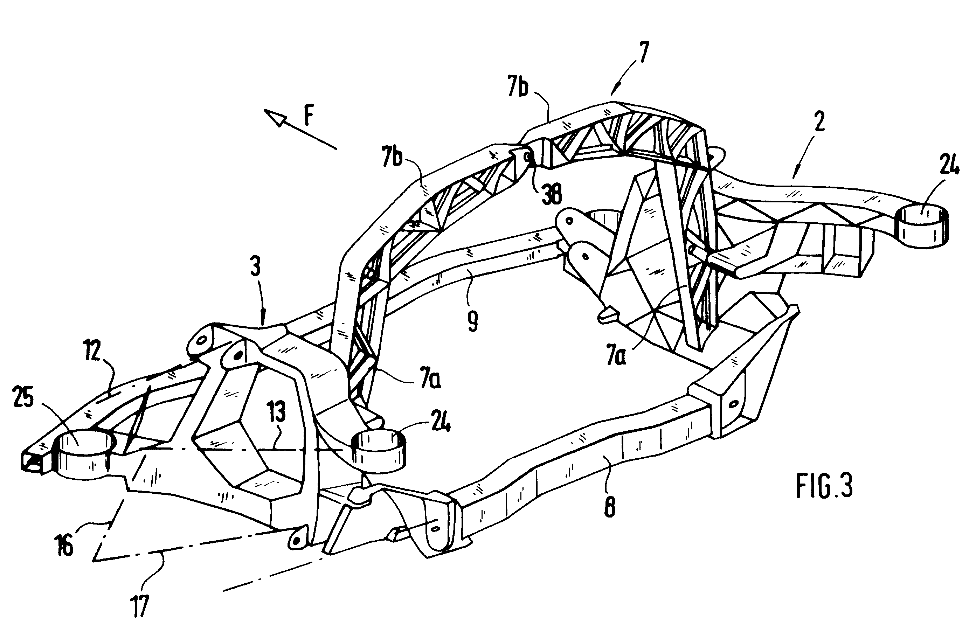

- Fig. 2 und 3: schaubildliche Darstellungen eines Fahrschemels für ein Fahrzeug mit einer hintenliegenden Antriebseinheit,
- Fig. 4: eine schematische Darstellung eines Seitenteiles des Fahrschemels mit den Anbindungen der Querträger gemäß der Fahrzeugtypen nach den Fig. 1 und 2,

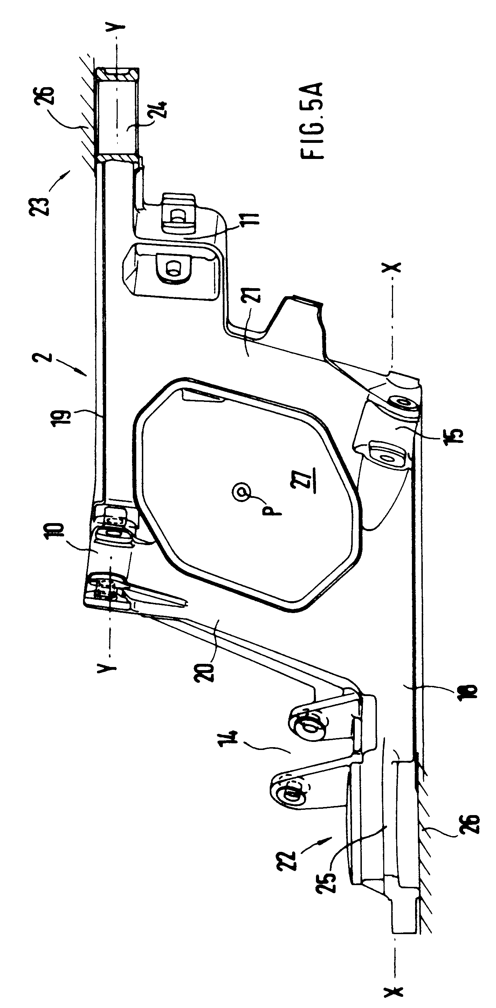

- Fig. 5 und 5a: ein konstruktiv ausgeführtes Seitenteil des Fahrschemels, wobei Fig. 5 eine Ansicht auf das Seitenteil von innen und Fig. 5a eine Ansicht des Seitenteils von außen zeigt,

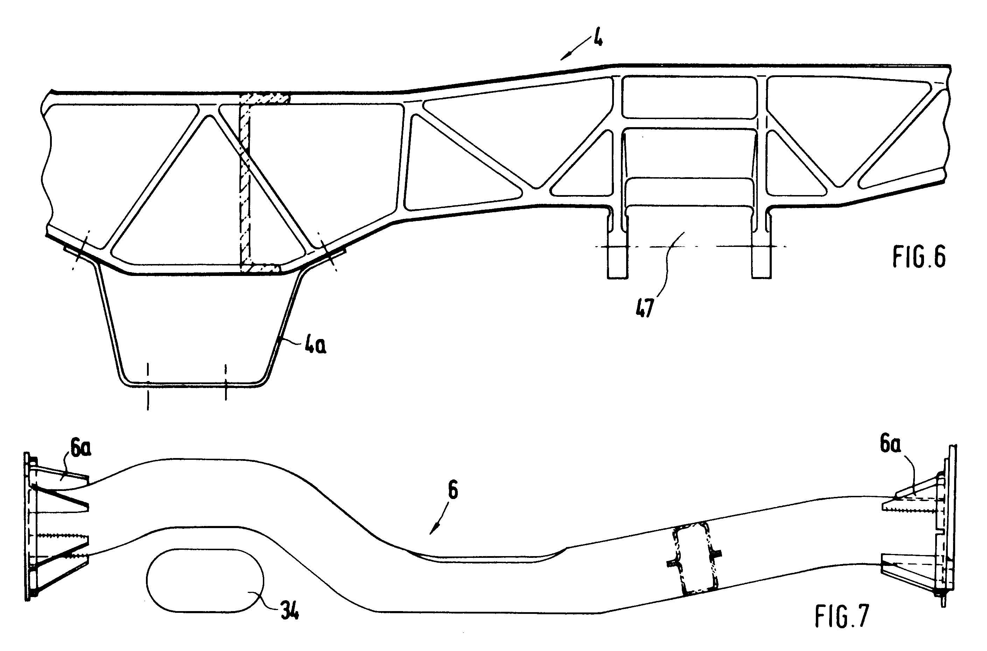

- Fig. 6: ein innenliegender oberer Querträger für die Ausführung nach dem Fahrzeugtyp gemäß Fig. 1,
- Fig. 7: ein vornliegender unterer Querträger für die Ausführung nach dem Fahrzeugtyp gemäß Fig. 1,
- Fig. 8: ein hinten untenliegender Querträger für die Ausführung nach dem Fahrzeugtyp gemäß den Fig. 1 und 2,
- Fig. 9: ein vornliegender unterer Querträger für die Ausführung nach dem Fahrzeugtyp gemäß Fig. 2,

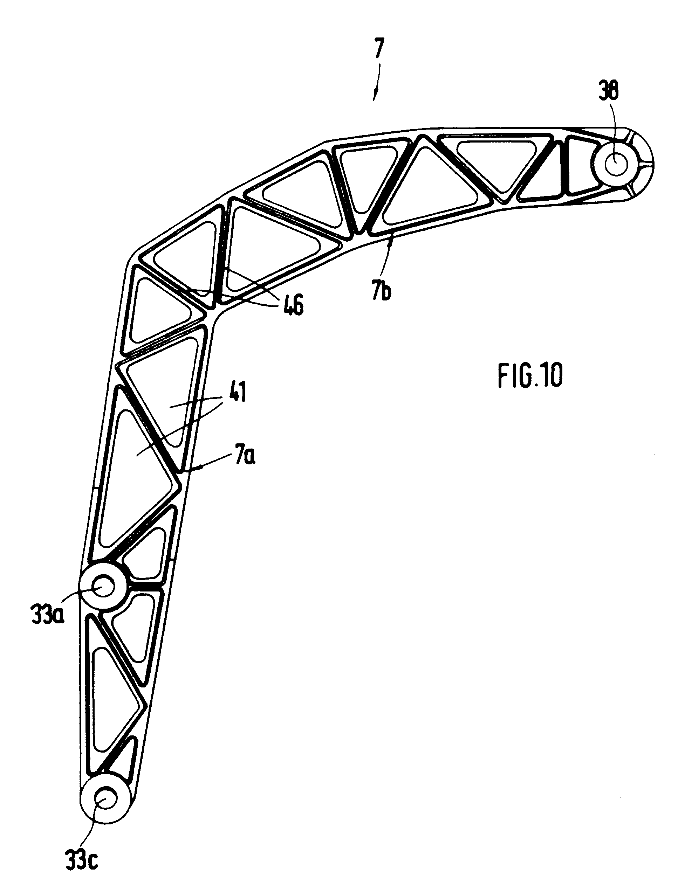

- Fig. 10: die vergrößerte Darstellung einer Hälfte eines Brückengliedes für den Fahrzeugtyp gemäß Fig. 2,
- Fig. 11: eine Draufsicht eines hinteren untenliegenden, aus einem Stellzylinder bestehenden Querträgers,
- Fig. 12: eine Einzelheit Z der länglichen Konsole zwischen Seitenteil und Stellzylinder in einer Vorderansicht, und
- Fig. 13: eine Ansicht in Richtung X der Fig. 12 auf ein Stabilager gesehen.

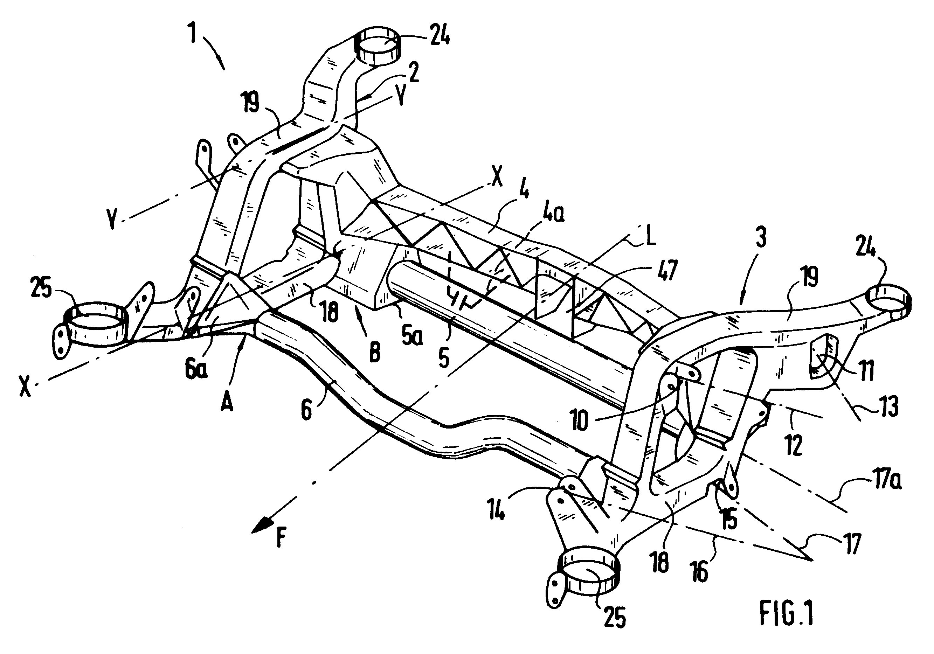

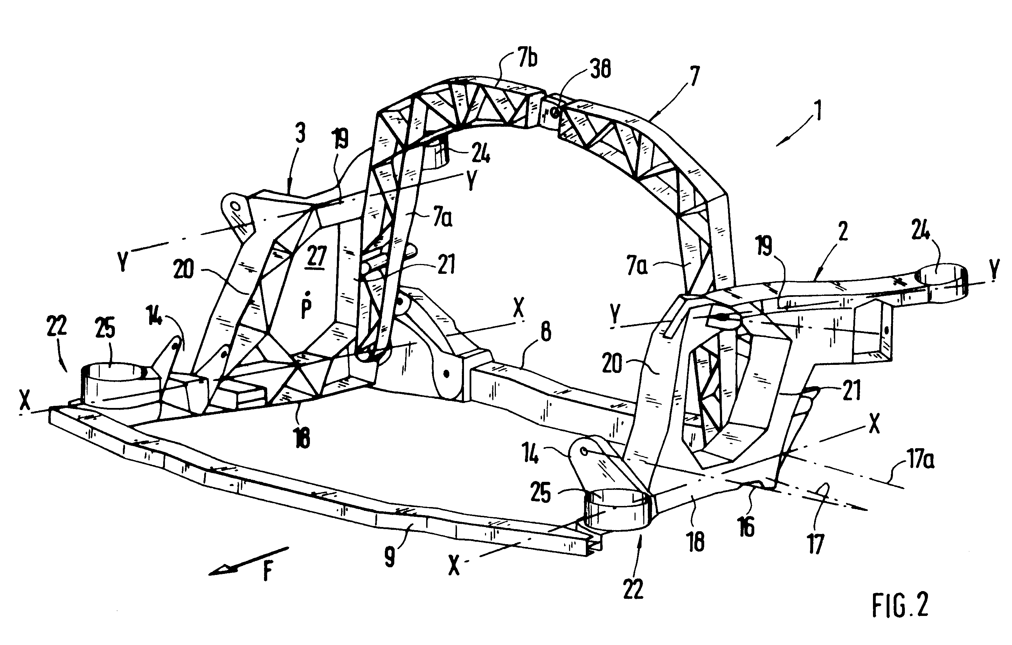

Ein Fahrschemel 1 für ein Kraftfahrzeug umfasst zwei baugleiche Seitenteile 2 und 3 sowie diese miteinander verbindende Querträger 4, 5 und 6 (Fig. 1) für einen ersten Fahrzeugtyp mit vornliegendem Antriebsaggregat und Hinterachsdifferential und mit Querträgern 7, 8 und 9 (Fig. 2) für einen Fahrzeugtyp mit einem hintenliegenden Antriebsaggregat, bestehend aus Motor, Getriebe und Hinterachsdifferential. Jeder Fahrzeugtyp kann eine Hinterradlenkung aufweisen, die einen speziellen hinteren Querträger 50 statt des Querträgers 5 bzw. 8 bedingt.

Das Seitenteil 2 und 3 besteht aus einem torsions- und biegesteifen Rahmen mit z.B. einseitiger Verrippung, der sich an jeder Radseite in einer senkrechten Längsebene erstreckt. Die Verrippung am Seitenteil ist so ausgeführt, daß das Profil nur zur Fahrzeugmitte offen ist, so daß am Rad anfallender Schmutz sich nicht in den Rippen festsetzt. Zwischen den Seitenteilen 2 und 3 sind die Querträger 4, 5 und 6 bzw. 7, 8 und 9 angeordnet und mit den Seitenteilen 2 und 3 verschraubt. In den Seitenteilen 2 und 3 sind Lagerungen 10 und 11 für in einer oberen Ebene Y-Y angeordnete Lenkerarme 12, 13 und Lagerungen 14, 15 für in einer unteren Ebene X-X angeordnete Lenkerarme 16, 17 vorgesehen (Fig. 1). Desweiteren ist in der Ebene der Lenker 16 und 17 eine Spurstange 17a angeordnet, die sich am Querträger 5 bzw. 8 abstützt. Bei einer Anordnung einer Hinterradlenkung ist die Spurstange 17a mit einer Kolbenstange eines Stellzylinders verbunden.

Die Seitenteile 2, 3 sind vorzugsweise als Gußteile ausgeführt und weisen jeweils in einer ersten unteren horizontalen Ebene X-X einen Untergurt 18 und im Abstand hierzu in einer zweiten oberen horizontalen Ebene Y-Y einen Obergurt 19 auf. Diese Gurte 18 und 19 sind über beabstandete aufrechte Streben 20 und 21, die eine Öffnung 27 zwischen sich bilden, miteinander einteilig zu einer Festigkeitseinheit verbunden. An den freien Enden 22 und 23 der Gurte 19 und 18 sind jeweils Lager 24 und 25 zur Verbindung mit dem Fahrzeugaufbau 26 vorgesehen, die nicht näher gezeigt sind. An den Seitenteilen sind Gehänge 48 für Stabilisatoren 49 befestigt.

Damit eine Beeinflussung der Radaufhängung über die Lager in den Seitenteilen 2 3 unterbunden wird, sind diese in definie er Weise ausgelegt. So wird der Fahrschemel 1 über stehende elastische Lager mit dem Fahrzeugaufbau 26 verbunden. Diese Lager weisen in Fahrzeughoch- und -längsrichtung eine weichere Kennung auf als in Fahrzeugquerrichtung. Vorzugsweise sind diese Lager des Fahrschemels zur Befestigung am Fahrzeugaufbau in einem gleichen Längsabstand a zu einer Raddrehachse bzw. zu einem Mittelpunkt P der Öffnung 27 in den Seitenteilen angeordnet. Der Querträger 5 bzw. 8 weist inliegend den Stellzylinder 40 auf, der von einem Trägerteil umgeben ist, das entsprechend der Belastung dimensioniert ist und eine teilweise eckige Form aufweist. Mit dem Trägerteil des Stellzylinders 40 ist ein Hinterradstellglied 44 verbunden, das eine kompakte Baueinheit mit dem Querträger 8 bildet.

Die zwischen den Streben 20 und 21 und den Gurten 18 und 19 der Seitenteile 2 und 3 gebildete Öffnung 27 weist einen ungefähren Mittelpunkt P auf, der mit der Raddrehachse übereinstimmt bzw. durch den eine nicht gezeichnete Gelenkwelle bei Hinterradantrieb hindurchgeführt ist.

Zur Montage sind die Seitenteile 2 und 3 mit den unteren Lenkern 16, 17 und den oberen Lenkern 12, 13 verbunden und bilden eine Vormontageeinheit. Diese Einheit wird mit den Querträgern 4, 5, 6 bzw. 7, 8, 9 verbunden und als Endmontageeinheit über die Abstützlager 24, 25 mit dem Fahrzeugaufbau 26 zusammengeführt.

Die Montage in anderer Weise, wie die Verbindung der Seitenteile 2, 3 mit den Querträgern und anschließend die Verbindung mit der Radaufhängung, ist auch möglich. Die Montageweise erfolgt jeweils nach den günstigsten Gegebenheiten einer Bandfertigung.

Die Lager 24 und 25 im Seitenteil 2, 3 für die Abstützlager zum Fahrzeugaufbau 26 sind auf einer Verbindungslinie 30 angeordnet, die durch den Mittelpunkt P der Öffnung 27 bzw. durch die Raddrehachse verläuft. Unmittelbar benachbart dieser Verbindungslinie 30 ist einerseits die Aufnahme 11 für einen oberen hinteren Lenkerarm 13 und andererseits die Aufnahme 14 für einen unteren vorderen Lenkerarm 16 vorgesehen.

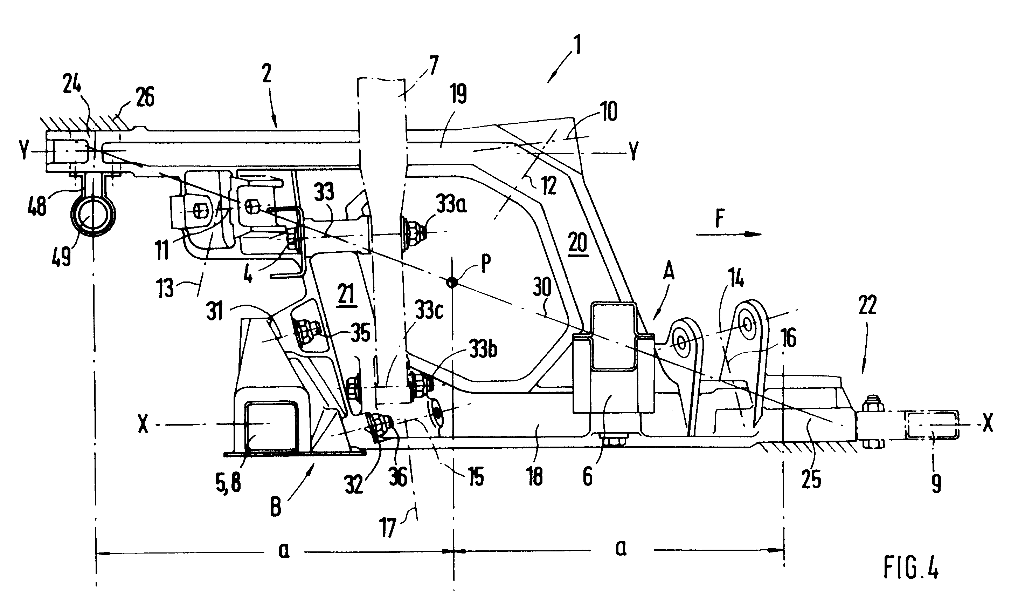

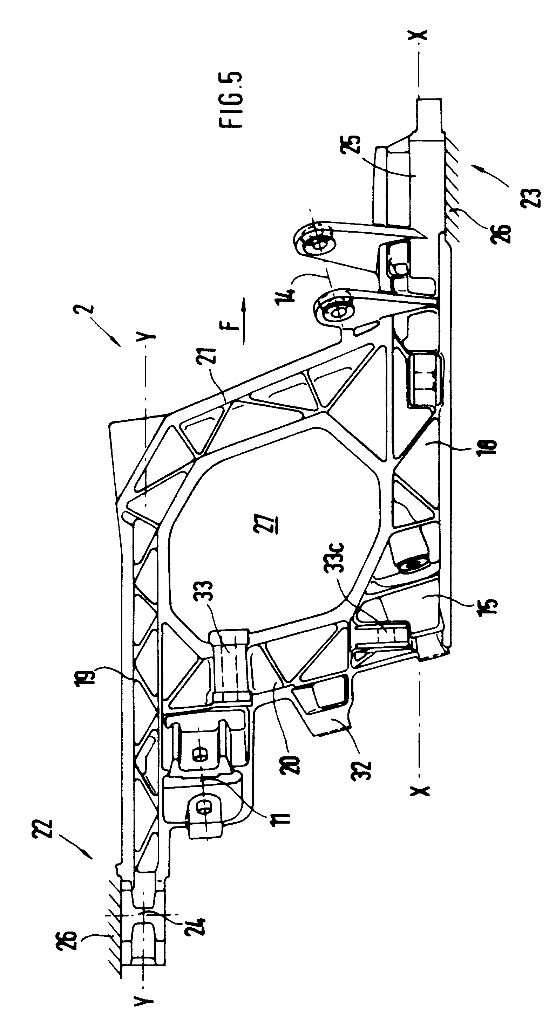

Die Querträger 4, 5 und 6 bzw. 7, 8 und 9 sind über Schrauben in Knotenpunkten der Seitenteile 2 und 3 gehalten, wobei für die Querträger 5 und 8 jeweils gleiche Befestigungsbohrungen 31, 32 in den Seitenteilen 2 und 3 verwendet werden. Für die Querträger 4 und 7 wird dagegen nur eine Befestigungsbohrung 33 gemeinsam verwendet, wobei der Querträger 7 eine weitere Bohrung 33c aufweist, was in Fig. 4 näher dargestellt ist. In dieser Fig. 4 sind die Querträger 4, 5, 6, 7, 8 und 9 für die beiden Fahrzeugtypen gemäß der Fig. 1 und 2 gemeinsam gezeigt.

In der unteren horizontalen Ebene X-X für den ersten Fahrzeugtyp gemäß Fig. 1 mit Hinterachsdifferential werden die Querträger 4, 5 und 6, wie vorstehend schon beschrieben, verwendet. So ist in der unteren horizontalen Ebene X-X im zusammentreffenden Bereich A des Untergurtes 18 mit der aufrechten Strebe 20 der vornliegende Querträger 6 (Fig. 7) angeordnet, der endseitig jeweils einen Verbindungsflansch 6a aufweist, der über Schrauben mit dem Seitenteil 2 und 3 verbunden wird. Dieser Querträger 6 kann entweder zweischalig ausgeführt sein oder aus einem Rohr bestehen. Der Formverlauf des Trägers in Fahrzeugquerrichtung ist entsprechend der Form des Hinterachsdifferentials und von Abgasleitungen 34 ausgeführt.

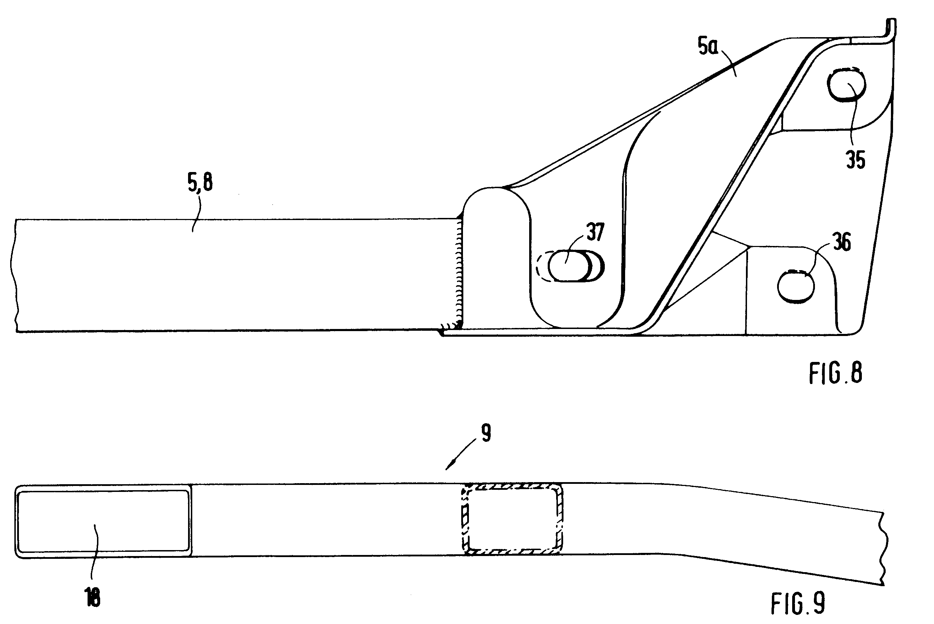

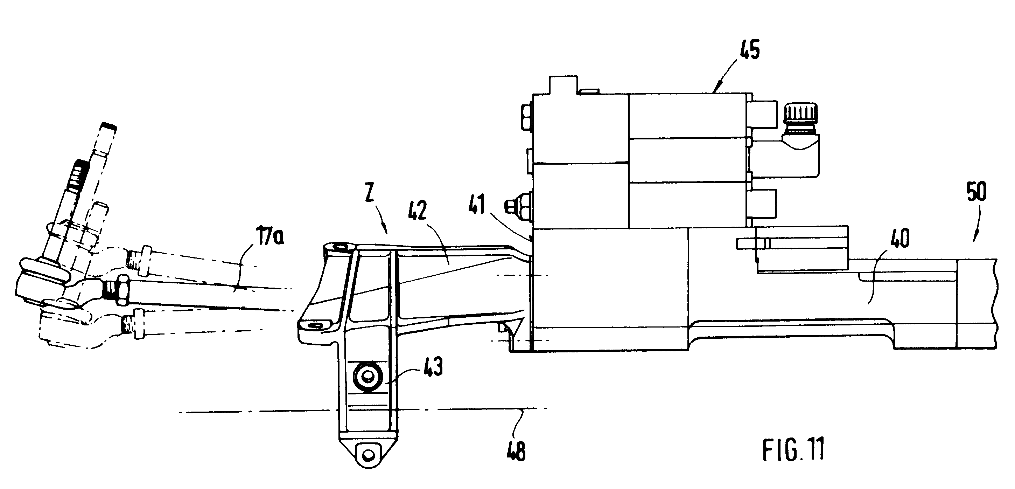

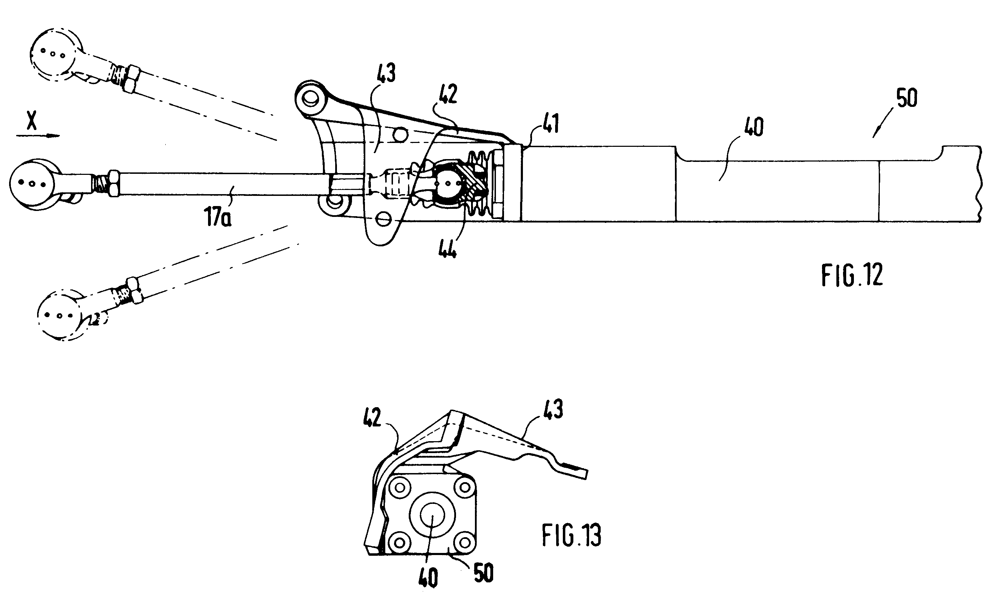

Der weitere hintenliegende Querträger 5, 8in der Ebene X-X ist im zusammentreffenden Bereich B des Untergurtes 18 mit der Strebe 21 angeordnet und über endseitige Verbindungsflansche 5a mittels Schrauben 35 und 36 (Fig. 8) am Seitenteil 2, 3 befestigt. Der Verbindungsflansch 5a und der Querträger 5 bzw. 8 kann einteilig ausgebildet sein. Dieser Querträger 5 bzw. 8 kann bei einem Fahrzeug mit Hinterradlenkung gemäß der Fig. 11 und 12 aus einem Stellzylinder 38 bestehen, was nachstehend näher erläutert wird.

Oberhalb des Querträgers 5 bzw. 8 ist ein weiterer Querträger 4 bzw. 7 zwischen den Seitenteilen 2 und 3 angeordnet. Zur Befestigung des Trägers 4 über Schrauben sind Bohrungen in Ansätzen der Seitenteile 2 und 3 angeordnet, die in Fahrzeuglängsrichtung verlaufen. Über eine in einer oberen Bohrung 33 eingezogene Schraube 33a wird einerseits der Querträger 4 und andererseits der Querträger 7 befestigt, der zudem über einen weiteren Bolzen 33b in der Bohrung 33c im Seitenteil 2, 3 gehalten wird.

Der Querträger 4 ist vorzugsweise als U-Profil in Guß- oder Blechbauweise ausgeführt und weist eine in der Fahrzeuglängsmittenachse angeordnete Lageraufnahme 47 auf, die ein Hinterachsdifferential über ein eingesetztes Lager abstützt. Der Träger 4 kann über Abstützungen 4a zu beiden Seiten der Lageraufnahme 37 mit dem darunterliegenden Träger 5 verbunden sein.

Der weitere Querträger 7 (Fig. 2) ist als bogenförmiges Brückenglied ausgebildet, das vertikal erstreckende Schenkel 7a aufweist, an die sich oberhalb der Ebene Y-Y der Seitenteile 2, 3 querverlaufende Stützstege 7b anschließen. Das Brückenglied 7 besteht vorzugsweise aus zwei baugleichen Teilen 7a und 7b, wobei der quer verlaufende Stützsteg 7b jedes Brückengliedes über einen Bolzen 38 verbunden ist, der sich in Fahrzeuglängsrichtung erstreckt. Dieser Bolzen 38 hat alleinig eine Verbindungsfunktion ohne festigkeitsmäßig zu wirken. Das Brückenglied besteht aus einem Fachwerkelement mit Rippen 46, zwischen denen Öffnungen 41 gebildet sind.

Gemäß der Ausführung nach Fig. 2 ist mit den freien Enden 22 des Untergurtes 18 der Seitenteile 2 und 3 der Querträger 9 verbunden, welcher im Querschnitt rechteckförmig ausgeführt ist und an seinen freien Enden Aufnahmen zum Überstecken auf die Seitenteile 2, 3 aufweist und eine Verbindung über Bolzen erfolgt.

Der Querträger 5 bzw. 8 kann mit einem Stellzylinder für eine Hinterradlenkung verbunden sein, was nicht näher dargestellt ist. Die Kolbenstange 44 des Stellzylinders 40 ist dann mit der Spurstange 17a verbunden, die gelenkig am Radträger des Fahrzeugs angreift.

Nach einer weiteren Ausführung gemäß der Fig. 11 und 12 ist der Stellzylinder 40 als Querträger 50 ausgeführt, der dann die Querträger 5 bzw. 8 ersetzt. An den freien Stirnenden 41 des Zylindergehäuses ist jeweils eine längliche Konsole 42 befestigt, die mit den Seitenteilen 2 und 3 lösbar über Schrauben verbunden wird. Diese Konsole 42 besteht aus einem torsions- und biegeweichen offenen Profil, das in Querrichtung etwa winkelförmig ausgebildet ist. Mit der Konsole 42 ist wahlweise ein Lager 43 eines Stabilisators 48 verbunden.

## Patentansprüche

1. Fahrschemel für ein Kraftfahrzeug mit zwei in Fahrzeuglängsrichtung verlaufenden Seitenteilen, die jeweils aus einem torsions- und biegesteifen Rahmen gebildet sind, der sich in einer senkrechten Längsebene des Fahrzeugs erstreckt, und die Lagerungen für Lenker von Radführungsgliedern aufweisen, wobei die Seitenteile über torsionssteife Querträger miteinander und die aus Seitenteilen und Querträgern bestehende starre Fahrschemel-Montageeinheit mit dem Fahrzeugaufbau verbunden sind, **gekennzeichnet durch** die Kombination folgender Merkmale:
a) die Seitenteile (2, 3) sind als Gußteile ausgeführt und weisen jeweils einen in einer ersten unteren horizontalen Ebene (X-X) verlaufenden Untergurt (18) und einen in einer zweiten horizontalen Ebene (Y-Y) verlaufenden Obergurt (19) auf, die über im Abstand angeordnete aufrechte Streben (20, 21) miteinander verbunden sind;
b) an einem freien Ende (22) des Untergurts (18) und an einem gegenüberliegenden freien Ende (23) des Obergurts (19) sind jeweils die Lager (24 und 25) zur Befestigung mit dem Fahrzeugaufbau (26) angeordnet;
c) in der unteren horizontalen Ebene (X-X) sind im zusammentreffenden Bereich des Untergurts (18) mit den beiden aufrechten Streben (20, 21) der Seitenteile (2, 3) jeweils Verbindungsknoten (A und B) gebildet, in denen - in bezug auf die Fahrtrichtung (F) - über Verbindungsflansche jeweils der hintere und der vordere Querträger (5 und 6; 8 und 9) mittels Schrauben befestigbar ist;
d) ein weiterer Querträger (4 bzw. 7) wird oberhalb des hinteren Querträgers (5 bzw. 8) an der aufrechten Strebe (21) jeweils über Verbindungsflansche gehalten;
e) die drei Querträger (4, 5, 6 und 7, 8, 9) bilden mit den beiden Seitenteilen (2 und 3) und den Radführungslenkern (12, 13 und 16, 17) sowie einer Spurstange (17a) eine Montageeinheit.

2. Fahrschemel nach Anspruch 1, **dadurch gekennzeichnet**, daß die Seitenteile (2 und 3) mit den Lenkern (12, 13 und 16, 17) des Radführungsgliedes eine Vormontageeinheit bilden, die verbunden mit den Querträgern (4, 5, 6 bzw. 7, 8, 9) als Endmontageeinheit ausgebildet ist, welche lagegenau, die Radeinstellungswerte unverändert beibehaltend, am Fahrzeugaufbau (26) befestigbar ist.

3. Fahrschemel nach den Ansprüchen 1 oder 2, **dadurch gekennzeichnet**, daß die Lager (24, 25) des Fahrschemels (1) an den Seitenteilen (2, 3) aus senkrecht stehenden elastischen Lagern bestehen, die in Fahrzeuglängs- und -hochrichtung eine weichere Kennung aufweisen als in Fahrzeugquerrichtung.

4. Fahrschemel nach Anspruch 3, **dadurch gekennzeichnet**, daß die Lager (24, 25) des Fahrschemels (1) zur Befestigung am Fahrzeugaufbau (26) an jedem Seitenteil (2, 3) etwa in einem gleichen Längsabstand (a) zur Raddrehachse (Mittelpunkt P) angeordnet sind.

5. Fahrschemel nach Anspruch 1, **dadurch gekennzeichnet**, daß zwischen den Streben (20, 21) und den Gurten (18, 19) der Seitenteile (2, 3) eine Öffnung (27) gebildet wird, die im Bereich einer durchgeführten Gelenkwelle eines Hinterradantriebs angeordnet ist.

6. Fahrschemel nach Anspruch 1, **dadurch gekennzeichnet**, daß die Lager (24, 25) in den Seitenteilen (2, 3) sowie eine Drehachse des über die Lenkerarme (12, 13 und 16, 17) der Radaufhängung gehaltenen Rades auf einer gemeinsamen Verbindungslinie (30) liegen.

7. Fahrschemel nach Anspruch 6, **dadurch gekennzeichnet**, daß die Lager (14 und 11) für einen - in bezug auf die Fahrtrichtung (F) - vorderen unteren Lenkerarm (16) und einen - in bezug auf die Fahrtrichtung (F) - hinteren oberen Lenkerarm (13) im Seitenteil (2, 3) nahe der Verbindungslinie (30) angeordnet sind.

8. Fahrschemel nach Anspruch 1, **dadurch gekennzeichnet**, daß die Seitenteile (2, 3) jeweils örtlich versetzt angeordnete Verbindungsknoten (A und B) für mehrere lösbar zu befestigende Querträger (5, 6 bzw. 8) aufweisen, wobei jeweils drei Querträger (4, 5, 6 und 7, 8, 9) mit den beiden Seitenteilen (2 und 3) und den Radführungslenkern (12, 13 und 16, 17) sowie einer Spurstange (17a) die Montageeinheit bilden.

9. Fahrschemel nach Anspruch 1, **dadurch gekennzeichnet**, daß der weitere Querträger (4) eine in der Fahrzeuglängsmittenachse (L) angeordnete Lageraufnahme (47) für ein Hinterachsdifferential aufweist, das - in bezug auf die Fahrtrichtung (F) - nur eine hintenliegende Abstützung aufweist und über eine weitere vornliegende Abstützung an einem Querträger bzw. am Fahrzeugaufbau gelagert ist.

10. Fahrschemel nach einem der vorhergehenden Ansprüche, **dadurch gekennzeichnet**, daß der weitere Querträger (7) als bogenförmiges Brückenglied ausgebildet ist und vertikal erstreckende Schenke (7a) mit anschließenden querverlaufenden Stützstegen (7b) umfasst, wobei die Schenkel (7a) über Schrauben mit den Seitenteilen (2, 3) verbindbar sind.

11. Fahrschemel nach Anspruch 10, **dadurch gekennzeichnet**, daß die Schenkel (7a) des Brückengliedes (7) über in Fahrzeuglängsrichtung angeordnete Schrauben an den Seitenteilen (2, 3) befestigbar sind.

12. Fahrschemel nach Anspruch 1 oder einem der vorhergehenden Ansprüche 10 und 11, **dadurch gekennzeichnet**, daß das Brückenglied (7) zweigeteilt aus gleichen Bauteilen bestehend ausgebildet ist und die beiden querverlaufenden Stützstege (7b) des Brückengliedes miteinander verbunden sind.

13. Fahrschemel nach Anspruch 12, **dadurch gekennzeichnet**, daß die Verbindung der beiden Stützstege (7b) über einen in Fahrzeuglängsrichtung angeordneten, eine Relativbewegung zulassenden Gelenkbolzen (38) erfolgt.

14. Fahrschemel nach den Ansprüchen 1, 2 und 8, **dadurch gekennzeichnet**, daß der weitere Querträger (7) über mindestens eine in Fahrzeuglängsrichtung ausgerichtete Schraube (35, 36) am Seitenteil (2, 3) befestigbar ist.

15. Fahrschemel nach den Ansprüchen 1, 2 und 8, **dadurch gekennzeichnet**, daß der - in bezug auf die Fahrtrichtung (F) - vornliegende Querträger (9) über endseitige Verbindungsflansche an den freien Enden (22) der Untergurte (18) der Seitenteile (2, 3) befestigbar ist.

16. Fahrschemel nach einem oder mehreren der vorhergehenden Ansprüche, **dadurch gekennzeichnet**, daß einerseits zwischen den Seitenteilen (2, 3) und andererseits zwischen den in einer unteren horizontalen Ebene (X-X) angeordneten Querträgern (8, 9) sowie dem überspannenden Brückenglied (7) eine Antriebseinheit angeordnet ist.

17. Fahrschemel nach einem oder mehreren der vorhergehenden Ansprüche, **dadurch gekennzeichnet**, daß die Gurte (18, 19) und die Streben (20, 21) der Seitenteile (2, 3) über Rippen verbundene Wände umfassen und zwischen den jeweiligen Rippen Hohlräume bzw. Durchbrüche vorgesehen sind.

18. Fahrschemel nach einem oder mehreren der vorhergehenden Ansprüche, **dadurch gekennzeichnet**, daß der - in bezug auf die Fahrtrichtung (F) - in der unteren horizontalen Ebene (X-X) angeordnete Querträger (8) einen Stellzylinder (40) für eine Hinterradlenkung aufnimmt, dessen Kolbenstange mit der Spurstange (17a) gelenkig verbunden ist.

19. Fahrschemel für ein Kraftfahrzeug mit einer Hinterradlenkung und zwei in Fahrzeuglängsrichtung verlaufenden Seitenteilen, die über Querträger miteinander verbunden sind und Lagerungen für Lenker von Radführungsgliedern aufweisen, wobei diese Fahrschemel-Einheit mit dem Fahrzeugaufbau verbunden ist, **dadurch gekennzeichnet**, daß - in bezug auf die Fahrtrichtung (F) - ein hintenliegender unterer Querträger (50) aus einem Stellzylinder (40) besteht, an dessen freie Enden jeweils eine längliche Konsole (42) befestigt ist, welche über Schrauben lösbar mit den Seitenteilen (2, 3) verbunden wird und durch die eine Kolbenstange (44) des Stellzylinders (40) geführt und mit der Spurstange (17a) verbunden ist.

20. Fahrschemel nach Anspruch 19, **dadurch gekennzeichnet**, daß die Konsole (42) aus einem biege- und torsionsweichen Profil besteht, an dem eine integrierte Lagerung (43) für einen Stabilisator (48) vorgesehen ist.

21. Fahrschemel nach den Ansprüchen 19 und 20, **dadurch gekennzeichnet**, daß mit dem Gehäuse des Stellzylinders (40) ein ein Ventil umfassendes Hinterradstellglied (45) verbunden ist.

22. Fahrschemel nach den Ansprüchen 1, 2 und 5, **dadurch gekennzeichnet**, daß die Verrippungen am Seitenteil (2 und 3) in der Weise angeordnet sind, daß diese zur Fahrzeugmittellängsachse hin gerichtet sind, wobei die Außenflächen der Seitenteile geschlossen sind.

## Claims

1. A subframe for a motor vehicle with two lateral parts which extend in the longitudinal direction of the vehicle and which are each formed by a torsionally and flexurally rigid frame extending in a vertical longitudinal plane of the vehicle and comprise mountings for support arms of wheel-guide members, wherein the lateral parts are connected to one another by way of torsionally rigid transverse supports and the rigid subframe-assembly unit comprising the lateral parts and the transverse supports is connected to the vehicle body, **characterized by** the combination of the following features:
a) the lateral parts (2, 3) are formed as cast parts and each comprise a lower chord (18) extending in a first lower horizontal plane (**X-X**) and an upper chord (19) extending in a second horizontal plane (**Y-Y**), the said chords being connected to each other by way of upright, spaced struts (20, 21);
b) the bearings (24 and 25) for fastening to the vehicle body (26) are each arranged at one free end (22) of the lower chord (18) and at an opposite free end (23) of the upper chord (19);
c) connecting joints (**A** and **B**) are each formed in the coincident area of the lower chord (18) with the two upright struts (20, 21) of the lateral parts (2, 3) in the lower horizontal plane (**X**-**X**), the rear and the front transverse supports (5 and 6; 8 and 9) - with respect to the direction of travel (**F**) - each being securable by means of bolts in the said connecting joints (**A** and **B**) by way of connecting flanges;
d) a further transverse support (4 and 7 respectively) is held above the rear transverse support (5 and 8 respectively) on the upright strut (21) by way of respective connecting flanges;
e) the three transverse supports (4, 5, 6 and 7, 8, 9) form an assembly unit with the two lateral parts (2 and 3) and the wheel-guide support arms (12, 13 and 16, 17) as well as a track rod (17a).

2. A subframe according to Claim 1, **characterized in that** the lateral parts (2 and 3) form a pre-assembly unit with the support arms (12, 13 and 16, 17) of the wheel-guide member, the pre-assembly unit when connected to the transverse supports (4, 5, 6 and 7, 8, 9 respectively) forming a final assembly unit which can be secured to the vehicle body (26) in the precise position so that the wheel-setting values remain unchanged.

3. A subframe according to Claim 1 or 2, **characterized in that** the bearings (24, 25) of the subframe (1) on the lateral parts (2 and 3) comprise resilient bearings positioned vertically and having a weaker characteristic in the longitudinal and vertical directions of the vehicle than in the transverse direction of the vehicle.

4. A subframe according to Claim 3, **characterized in that** the bearings (24, 25) of the subframe (1) for fastening to the vehicle body (26) are arranged on each lateral part (2, 3) at substantially the same longitudinal distance (**a**) from the rotational axis (centre **P**) of the wheel.

5. A subframe according to Claim 1, **characterized in that** an opening (27) is formed between the struts (20, 21) and the chords (18, 19) of the lateral parts (2 and 3), the opening (27) being formed in the region of a universal-joint shalt of a rear-wheel drive passing therethrough.

6. A subframe according to Claim 1, **characterized in that** the bearings (24, 25) in the lateral parts (2, 3) and a rotational axis of the wheel held by way of the support arms (12, 13 and 16, 17) of the wheel suspension are situated in a common connecting line (30).

7. A subframe according to Claim 6, **characterized in that** the bearings (14 and 11) for a front lower support arm (16) - with respect to the direction of travel (**F**) - and a rear upper support arm (13) - with respect to the direction of travel (**F**) - are arranged in the lateral part (2, 3) close to the connecting line (30).

8. A subframe according to Claim 1, **characterized in that** the lateral parts (2, 3) each have connecting joints (**A** and **B**) arranged offset laterally for a plurality of transverse supports (5, 6 and 8 respectively) to be secured in a releasable manner, wherein three transverse supports (4, 5, 6 and 7, 8, 9) form the assembly unit respectively with the two lateral parts (2 and 3) and the wheel-guide support arms (12, 13 and 16, 17) as well as a track rod (17a).

9. A subframe according to Claim 1, **characterized in that** the further transverse support (4) has a bearing receiving means (47) situated in the longitudinal median axis (**L**) of the vehicle for a rear-axle differential which has only one support at the rear with respect to the direction of travel (**F**) and is mounted on a transverse support or on the vehicle body by way of a further support arranged at the front.

10. A subframe according to one of the preceding Claims, **characterized in that** the further transverse support (7) is in the form of an arcuate bridge member and comprises vertically extending arms (7a) with adjoining transversely extending support webs (7b), wherein the arms (7a) can be connected to the lateral parts (2, 3) by way of bolts.

11. A subframe according to Claim 10, **characterized in that** the arms (7a) of the bridge member (7) can be secured to the lateral parts (2, 3) by way of bolts arranged in the longitudinal direction of the vehicle.

12. A subframe according to Claim 1 or one of the preceding Claims 10 and 11, **characterized in that** the bridge member (7) is divided into two similar components, and the two transversely extending support webs (7b) of the bridge member are connected to each other.

13. A subframe according to Claim 12, **characterized in that** the two support webs (7b) are connected by way of a joint pin (38) arranged in the longitudinal direction of the vehicle and permitting relative movement.

14. A subframe according to Claims 1, 2 and 8, **characterized in that** the further transverse support (7) can be secured to the lateral part (2, 3) by way of at least one bolt (35, 36) orientated in the longitudinal direction of the vehicle.

15. A subframe according to Claims 1, 2 and 8, **characterized in that** the front transverse support (8) with respect to the direction of travel (**F**) can be secured to the free ends (22) of the lower chord (18) of the lateral parts (2, 3) by way of connecting flanges at the ends.

16. A subframe according to one or more of the preceding Claims, **characterized in that** a drive unit is arranged on the one hand between the lateral parts (2, 3) and on the other hand between the transverse supports (8, 9) arranged in a lower horizontal plane (**X-X**) and the traversing bridge member (7).

17. A subframe according to one or more of the preceding Claims, **characterized in that** the chords (18, 19) and the struts (20, 21) of the lateral parts (2, 3) comprises walls connected by way of ribs, and cavities or perforations are provided between the respective ribs.

18. A subframe according to one or more of the preceding Claims, **characterized in that** the transverse support (8) arranged in the lower horizontal plane (**X-X**) with respect to the direction of travel (**F**) receives an adjusting cylinder (40) for a rear-wheel steering-mechanism, the piston-rod of the said adjusting cylinder (40) being connected to the track rod (17a) in an articulated manner.

19. A subframe for a motor vehicle with a rear-wheel steering-mechanism and two lateral parts which extend in the longitudinal direction of the vehicle and which are connected to each other by way of transverse supports and comprise mountings for support arms of wheel-guide members, wherein the said subframe- unit is connected to the vehicle body, **characterized in that** a rear lower transverse support (50) - with respect to the direction of travel (**F**) - comprises an adjusting cylinder (40), the free ends of which each have an elongate bracket (42) attached thereto, which brackets are releasably connected to the lateral parts (2, 3) by way of bolts and by which one piston rod (44) of the adjusting cylinder (40) is guided and connected to the track rod (17a).

20. A subframe according to Claim 19, **characterized in that** the bracket (42) comprises a flexurally and torsionally yielding profile on which an integrated mounting (43) for a stabilizer (48) is provided.

21. A subframe according to Claims 19 and 20, **characterized in that** a rear-wheel adjustment member (45) comprising a valve is connected to the housing of the adjusting cylinder (40).

22. A subframe according to Claims 1, 2 and 5, **characterized in that** the ribs on the lateral part (2, 3) are arranged in such a way that they are directed towards the median longitudinal axis of the vehicle, wherein the outer faces of the lateral parts are closed.

## Revendications

1. Faux-châssis pour un véhicule automobile comportant deux éléments latéraux s'étendant dans la direction longitudinale du véhicule, qui sont formés chacun par un cadre rigide en torsion et en flexion, qui s'étend dans un plan longitudinal vertical du véhicule, et qui présentent des appuis pour des bras d'organe de guidage de roue, les éléments latéraux étant reliés entre eux par des traverses rigides en torsion et l'unité rigide de montage du faux-châssis, constituée des parties latérales et des traverses, étant reliée à la carrosserie du véhicule, caractérisé par la combinaison des caractéristiques suivantes :
a) les éléments latéraux (2, 3) sont des pièces en forte et présentent chacune une membrure inférieure (18), s'étendant dans un premier plan horizontal inférieur (X-X) et une membrure supérieure (19), s'étendant dans un second plan horizontal (Y-Y), qui sont reliés entre elles par des entretoises (20, 21) verticales, espacées ;
b) à une extrémité libre (22) de la membrure inférieure (18) et à une extrémité libre (23) opposée de la membrure supérieure (19), sont prévus les appuis (24 et 25) pour la fixation avec la carrosserie du véhicule (26) ;
c) dans le plan horizontal inférieur (X-X) il est Formé des noeuds de liaison (A et B) dans la zone de réunion de la membrure inférieure (18) avec les deux entretoises (20, 21) vertical es des éléments latéraux (2, 3), noeuds de liaison dans lesquels la traverse arrière et la traverse avant (5 et 6 ; 8 et 9) - par rapport au sens de marche (F) - peuvent être fixées au moyen de vis par des brides de liaison ;
d) une autre traverse (4 ou 7) est fixée au-dessus de la traverse arrière (5 ou 8) sur l'entretoise (21) verticale, par des brides de liaison ;
e) les trois traverses (4, 5, 6 et 7, 8, 9) forment une unité de montage avec les deux éléments latéraux (2 et 3) et les bras de guidage de roue (12, 13 et 16, 17) ainsi qu'avec une barre d'accouplement (17a).

2. Faux-châssis sel on la revendication 1, caractérisé en ce que les éléments latéraux (2 et 3) forment avec les bras (12, 13 et 16, 17) de l'organe de guidage de roue une unité de prémontage, qui reliée aux traverses (4, 5, 6 ou 7, 8, 9), est configurée en unité de montage finale, qui peut être fixée sur la carrosserie (26) du véhicule dans une position précise maintenant inchangées les valeurs de réglage des roues.

3. Faux-châssis selon les revendications 1 ou 2, caractérisé en ce que les appuis (24, 25) du faux-châssis (1) sur les éléments latéraux (2, 3) sont constitués de paliers élastiques verticaux qui présentent dans la direction longitudinale du véhicule et dans la direction verticale une caractéristique plus souple que dans la direction transversale du véhicule.

4. Faux-châssis selon la revendication 3, caractérisé en ce que les appuis (24, 25) du faux-châssis (1) pour la fixation sur la carrosserie (26) du véhicule sont disposés sur chaque élément latéral (2, 3) à peu près à une même distance longitudinale (a) de l'axe de rotation de la roue (point central P).

5. Faux-châssis sel on la revendication 1, caractérisé en ce qu'entre les entretoises (20, 21) et les membrures (18, 19) des éléments latéraux (2, 3) est formée une ouverture (27), qui est située dans la zone d'un arbre articulé traversant, d'un entraînement de roue arrière.

6. Faux-châssis selon la revendication 1, caractérisé en ce que les appuis (24, 25) dans les éléments latéraux (2, 3) ainsi qu'un axe de rotation de la roue maintenue par les bras (12, 13 et 16, 17) de la suspension de roue, se situent sur une ligne de liaison (30) commune.

7. Faux-châssis sel on la revendication 6, caractérisé en ce que les appuis (14 et 11) pour un bras (16) avant et arrière - par rapport au sens de marche (F) - et un bras (13) arrière supérieur - par rapport au sens de marche (F) - sont placés dans l'élément latéral (2, 3), à proximité de la ligne de liaison (30).

8. Faux-châssis selon la revendication 1, caractérisé en ce que les éléments latéraux (2, 3) présentent chacun des noeuds de liaison (A et B) décalés localement pour plusieurs traverses (5, 6 ou 8) à fixer de manière amovible, trois traverses (4, 5, 6 et 7, 8, 9) formant l'unité de montage avec les deux éléments latéraux (2 et 3) et les bras de guidage de roue (12, 13 et 16, 17) ainsi qu'avec une barre d'accouplement (17a).

9. Faux-châssis selon la revendication 1, caractérisé en ce que l'autre traverse (4) présente un logement d'appui (47), situé dans l'axe médian longitudinal (F) du véhicule, pour un différentiel d'essieu arrière - par rapport au sens de marche (F) - qui ne présente qu'un appui situé à l'arrière et est monté par un autre appui situé à l'avant, sur une traverse ou sur la carrosserie du véhicule.

10. Faux-châssis selon l'une des revendications précédentes, caractérisé en ce que l'autre traverse (7) est configurée en organe en pont en forme d'arc et présente des ailes (7a) s'étendant verticalement avec des dos d'appui (7b) s'y raccordant, s'étendant transversalement, les ailes (7a) pouvant être reliées par des vis avec les éléments latéraux (2, 3).

11. Faux-châssis sel on la revendication 10, caractérisé en ce que les ailes (7a) de l'organe en pont (7) peuvent être fixées sur les éléments latéraux (2, 3), par des vis situées dans la direction longitudinale du véhicule.

12. Faux-châssis sel on la revendication 1 ou l'une des revendications 10 et 11 précédentes, caractérisé en ce que l'organe en pont (7) est partagé en deux parties faites des mêmes composants et les deux dos d'appui (7b), s'étendant transversalement, de l'organe en pont sont reliés entre eux.

13. Faux-châssis sel on la revendication 12, caractérisé en ce que la liaison des deux dos d'appui (7b) s'effectue par un boulon d'articulation (38) situé dans la direction longitudinale du véhicule, autorisant un déplacement relatif.

14. Faux-châssis selon les revendication 1, 2 et 8, caractérisé en ce que l'autre traverse (7) peut être fixée sur l'élément latéral (2, 3), par au moins une vis (35, 36) orientée dans la direction longitudinale du véhicule.

15. Faux-châssis selon les revendications 1, 2 et 8, caractérisé en ce que la traverse (9) située à l'avant - par rapport au sens de marche (F) - peut être fixée par des brides de liaison terminales, aux extrémités libres (22) des membrures inférieures (18) des éléments latéraux (2, 3).

16. Faux-châssis selon une ou plusieurs des revendications précédentes, caractérisé en ce que d'un côté entre les éléments latéraux (2, 3) et d'un autre côté, entre les traverses (8, 9) placées dans un plan horizontal inférieur (X-X), et l'organe en pont (7), il est prévu une unité d'entraînement.

17. Faux-châssis selon une ou plusieurs des revendications précédentes, caractérisé en ce que les membrures (18, 19) et les entretoises (20, 21) des éléments latéraux (2, 3) comprennent des parois reliées par des nervures et des cavités ou des ajours sont prévus entre les nervures.

18. Faux-châssis selon une ou plusieurs des revendications précédentes, caractérisé en ce que la traverse (8) placée dans le plan horizontal inférieur (X-X) - par rapport au sens de la marche (F) - loge un vérin (40) pour une direction de roue arrière, dont la tige de piston est reliée de manière articulée avec la barre d'accouplement (17a).

19. Faux-châssis pour un véhicule automobile avec une direction de roue arrière et deux éléments latéraux s'étendant dans la direction longitudinale du véhicule, qui sont reliés entre eux par des traverses et qui comportent des appuis pour des bras d'organes de guidage de roue, cette unité de faux-châssis étant reliée à la carrosserie du véhicule, caractérisé en ce qu'une traverse inférieure (50) située à l'arrière - par rapport au sens de la marche (F) - est constituée d'un vérin (40) - à chacune des extrémités libres duquel est fixée une console (42) allongée, qui est reliée de manière amovible avec les éléments latéraux (2, 3), par des vis, et qui guide une tige de piston (44) du vérin (40) et est reliée avec la barre d'accouplement (17a).

20. Faux-châssis sel on la revendication 19, caractérisé en ce que la console (42) est faite d'un profilé souple en flexion et en torsion, sur lequel est prévu un appui intégré (43) pour un stabilisateur (48).

21. Faux-châssis selon les revendications 19 et 20, caractérisé en ce qu'un organe de réglage de roue arrière (45) comprenant une soupape, est relié au boîtier du vérin (40).

22. Faux-châssis sel on les revendications 1, 2 et 5, caractérisé en ce que les nervurages sur l'élément latéral (2 et 3) sont disposés de manière que ceux-ci soient dirigés vers l'axe médian longitudinal du véhicule, les surfaces extérieures des éléments latéraux étant fermées.
